# EUROPÄISCHE PATENTSCHRIFT

(11) **EP 0 372 510 B1**
(45) Veröffentlichungstag und Bekanntmachung des Hinweises auf die Patenterteilung: **10.03.1993**
(21) Anmeldenummer: 89122462.8
(22) Anmeldetag: 06.12.1989
(51) Int. Cl.: F16G 3/10

(54) **Gummiplattenanordnung zur Herstellung von Verbindungen zwischen Stahlseilgurten oder zur Reparatur eines Stahlseilgurtes**
Rubber sheet arrangement for joining steel cord belts together, or for repairing a steel cord belt
Dispositif de plaques de caoutchouc pour assembler des courroies à câbles d'acier ou pour réparer une courroie à câbles d'acier

(30) Priorität: 09.12.1988 DE 3841554; 13.01.1989 DE 3900911
(43) Veröffentlichungstag der Anmeldung: 13.06.1990
(73) Patentinhaber: STAHLGRUBER OTTO GRUBER GMBH & CO., 81675 München (DE)
(72) Erfinder: Josteit, Heinz, Dipl.-Ing., D-5020 Frechen-Bachem (DE)
(74) Vertreter: Beetz & Partner Patentanwälte

(56) Entgegenhaltungen:
- DE-A- 1 729 787
- DE-B- 1 115 436
- DE-B- 1 209 732
- US-A- 3 487 871

## Beschreibung

Die Erfindung betrifft eine Gummiplattenanordnung zum Verbinden der Enden eines mit Stahlseilen armierten Gurtbandes der im Oberbegriff des Patentanspruchs 1 angegebenen Gattung.

Aus der US-A-3 487 871 ist eine derartige Gummiplattenanordnung zum Verbinden der beiden Enden eines mit Stahlseilen armierten Gurtbandes bekannt, die aus einer oberen und einer unteren Platte besteht, von denen zumindest eine von Stegen begrenzte Längsnuten aufweist. Diese Nuten dienen zur Aufnahme der zuvor mit einem Gummikleber beschichteten Stahlseile. Die beiden Platten bestehen aus einer unvulkanisierten oder halb-vulkanisierten Gummimischung, die in Qualität und Eigenschaften der im Gurtband verwendeten Gummimischung entspricht. Beide Gummiplatten haben unvulkanisierte Kontaktflächen, wobei in zumindest einer dieser Kontaktflächen die Längsnuten ausgebildet sind. Zum Verbinden der beiden Enden eines mit Stahlseilen armierten Gurtbandes werden die obere und untere Deckschicht des jeweiligen Bandendes in dem vorgegebenen Verbindungsabschnitt abgeledert und die in der Kerngummischicht eingebetteten Stahlseile in vorgegebenen Längen freigeschnitten. Die einzelnen Stahlseilabschnitte werden von dem noch anhaftenden Gummi unter Verwendung eines Lösungsmittels gereinigt, mit einem Gummiklebstoff bestrichen und nach dem Trocknen dieses Klebstoffes in abwechselnder Folge in die benachbarten Längsnuten einer unteren Gummiplatte eingedrückt. Nach Auflegen der oberen Gummiplatte wird diese Plattenanordnung zwischen zwei Heizplatten durch die Einwirkung von Druck und Wärme vulkanisiert.

Aus der DE-B-1 209 732 ist ein Verfahren zum Verbinden der Enden eines mit Stahlseilen armierten Förderbandes bekannt, bei dem die Endabschnitte der Stahlseile an beiden Enden des ein Gurtband bildenden Förderbands freigelegt, in gegenseitiger Überlappung in den Längsnuten einer unteren Gummiplatte positioniert und mit einer Gummideckplatte des Förderbandmaterials abgedeckt werden. Anschließend erfolgt die Verfestigung dieser Verbindung durch die Einwirkung von Wärme und Druck. Die mit den rechteckigen Längsnuten versehene Platte besteht aus einer äußeren Deckschicht und einer ausvulkanisierten Innenschicht, in der die Längsnuten ausgebildet sind. Vor dem Verbindungsvorgang werden die mit Gummi rechteckig ummantelten Stahlseile und/oder die Stege und Nuten der Innenschicht mit einem Lösungs- oder Haftmittel eingestrichen.

In der DE-B-1 115 436 ist eine Brücke zum Längenausgleich von mit Metallseilen armierten Förder- bzw. Gurtbändern beschrieben, die eine mit Schrägnuten und darin eingeklemmten Seilabschnitten versehene Brückenplatte aus vulkanisiertem Kautschuk oder einem Kunststoff enthält. Nach der Positionierung dieser Brückenplatte zwischen den beiden Bandenden und nach dem Bestreichen mit einer Reparaturlösung werden Platten aus unvulkanisiertem Kautschuk auf die zwischen der Brückenplatte und den Deckschichten des Förderbands freiliegenden Metallseile aufgelegt und die Verlängerungsstelle wird zur Vulkanisation einer Wärmebehandlung unterzogen.

Der Erfindung liegt die Aufgabe zugrunde, eine Plattenanordnung der eingangs genannten Gattung zu schaffen, welche es erlaubt, eine Verbindung oder Reparatur von mit Stahlseilen armierten Gummibändern mit einem bedeutend geringeren Zeitaufwand ohne Gesundheitsgefährdung der mit den Arbeiten betrauten Personen durchzuführen.

Erfindungsgemäß wird diese Aufgabe durch die in den Patentansprüchen 1 bzw. 2 angegebenen Merkmale gelöst.

Die Kautschukmischung der Innenplatten ist bevorzugt in ihrer Konsistenz auf eine Stoffschlußbindung mit den verzinkten Oberflächen der Stahlseile eingestellt.

Vorteilhaftwird die Innenplatte zumindest auf ihrer die Stege aufweisenden Seite mit einer aufgelegten Kunststoffolie, insbesondere aus Polyethylen, geformt die durchgehend auf den Stegen und den Nuten anhaftet, um die Eigenschaften der Käutschukmischüng bis zur Verarbeitung der Innenplatte zu konservieren und die Form der Stege zu stabilisieren.

Da bei der erfindungsgemäßen Plattenanordnung keine Lösungsmittel und keine Kleber verwendet werden, treten keine umwelt schädliche und getähliche Dämpfe auf. Ferner ergibt sich eine bedeutende Zeiteinsparung, weil das Aufbringen, Abdampfen und Abkühlen des Lösemittels entfällt. Ein weiterer Vorteil ist die Verkülzung der Verbindungsabschnitte durch eines gesteigerte Festigkeit, weil bei der Vulkanisation eine Einbindung der Stahlseile in die Innenplatten während der Fließperiode des Gummis erfolgt.

Die erfindungsgemäße Plattenanordnung kann auch zum Reparieren von Gurtbändern eingesetzt werden, bei denen weniger als 25% der Stahlseile im mittleren Bandbereich durchgetrennt sind. Dazu werden ebenfalls die Deckschichten des Gurtbands abgeledert und die Stahlseile freigeschnitten und angerauht. Anschließend werden die Außenplatten und die Innenplatten auf die Abmessungen des freigelegten Reparaturbereiches zugeschnitten. Auf eine untere Außenplatte wird eine Innenplatte angeordnet und die durchtrennten Stahlseile werden in die Nuten zwischen den Stegen eingedruckt. Nach Auflegen der oberen Innen- und Außenplatte wird die Reparaturstelle zwischen aufgeheitzten Druckplatten vulkanisiert. Auch hierbei können Außenplatten mit angeformten Innenplatten eingesetzt werden.

Die Innenplatten können in Streifen in unterteilt sein, um den Transport und die Handhabung an der Arbeitsstelle zu erleichtern. Ferner kann eine Hilfsplatte mit angeformten Stegen vorgesehen sein, die zwischen die Stege der Innenplatte greifen und die Innenplatte für den Transport abstützen. Eine weitere Transport- und Arbeitsvereinfachung ergibt sich, wenn die Hilfsplatte gleichzeitig als ein Element einer Arbeitsbühne ausgebildet ist, die bei der Herstellung der Verbindung oder der Reparatur verwendet wird. Die Innenplatten können mit ihren zugeordneten Außenplatten, z.B. durch Ankleben oder Anformen, fest verbunden sein.

Die Erfindung wird nachstehend anhand von Ausführungsbeispielen näher erläutert. Es zeigen
Fig. 1 eine Gurtband-Verbindung in Draufsicht,
Fig. 2 einen Reparaturbereich eines Gurtbands in Draufsicht
Fig. 3 eine Gummiplattenanordnung mit Heizplatten im Qerschnitt,
Fig. 4 + 5 andere Gummiplattenanordnungen im Querschnitt
Fig. 6 eine Innenplatte mit angeformten Stegen in Querschnitt,
Fig. 7-10 verschiedene Verbindungssysteme in schematischer Draufsicht.

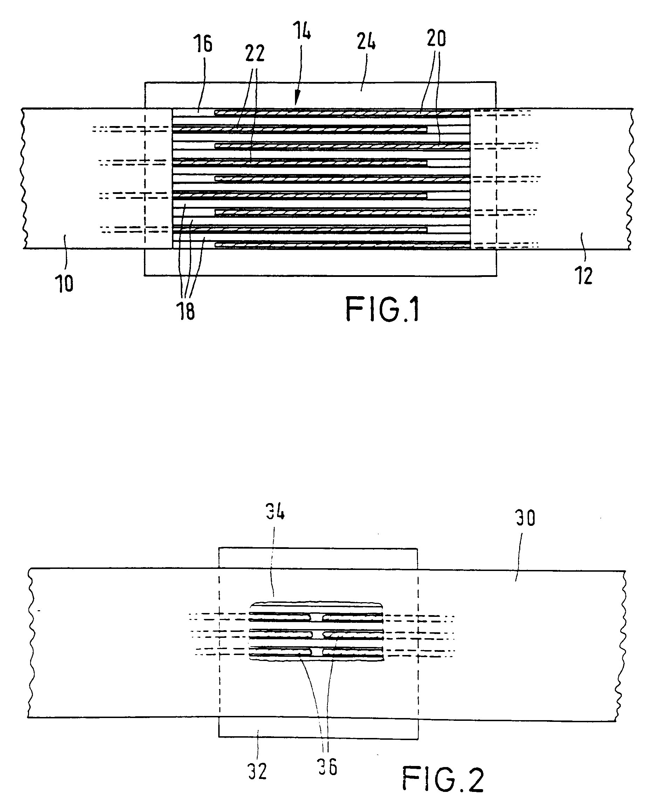

Fig. 1 zeigt zwei Gurtbandenden 10 und 12, die in einem Verbindungsbereich 14 miteinander verbunden werden. In dem Verbindungsbereich 14 ist eine untere Außenplatte angeordnet, auf welcher eine Innenplatte 16 mit angeformten Stegen 18 aufgelegt ist. Die Innenplatte 16 mit den Stegen 18 besteht aus einer vulkanisierbaren Kautschukmischung und die Außenplatte aus einem Gummi, dessen Qualität derjenigen der die Banddeckschichten bildenden Gummimischung entspricht. Die Kautschukmischung der Innenplatte 16 ist so gewählt, daß die Qualität des durch Vulkanisation entstandenen Gummis der Gummiqualität in dem die Stahlseile umgebenden Kern des Gurtbandes entspricht. Zwischen die Stege 18 sind Stahlseile 20 des einen Gurtbandendes 12 eingelegt, und zwar in jede zweite Nut zwischen den Stegen 18, während in die jeweils dazwischenliegenden Nuten Stahlseile 22 anderen des Gurtbandendes 10 eingelegt sind. Nach Anordnen der Stahlseile jedes Gurtbandendes 10 und 12 werden die Stahlseile und die Innenplatte 16 mit einer oberen Innenplatte und einer oberen Außenplatte abgedeckt und es wird eine Heizplatte aufgelegt, die mit einer die Anordnung abstützenden Heizplatte 24 verspannt wird. Durch Zusammenpressen und Aufheizen der Heizplatten erfolgt eine Vulkanisation des Kernmaterials an den Außenplatten und der Innenplatte mit den Stegen, so daß eine feste Einbettung der Stahlseile gewährleistet ist.

Fig. 2 zeigt einen Gurtbandbereich 30, der auf einer unteren Heizplatte 32 angeordnet ist. In dem Gurtbandbereich 30 ist eine Fläche 34 augeschnitten, in welcher durchtrennte Stahlseile 36 liegen. Zur Reparatur des Gurtesbands werden die Deckschichten abgeledert und die Stahlseile 36 freigeschabt und angerauht und nach Anordnen einer unteren Außenplatte und einer Innenplatte werden die Stahlseile 36 zwischen den Stegen angeordnet und es wird eine obere Innenplatte und ein Außenplatte aufgelegt. Danach wird eine obere Heizplatte mit der unteren Heizplatte 32 verspannt und durch Aufheizen der Heizplatten folgt eine Vulkanisierung des Bereiches 34.

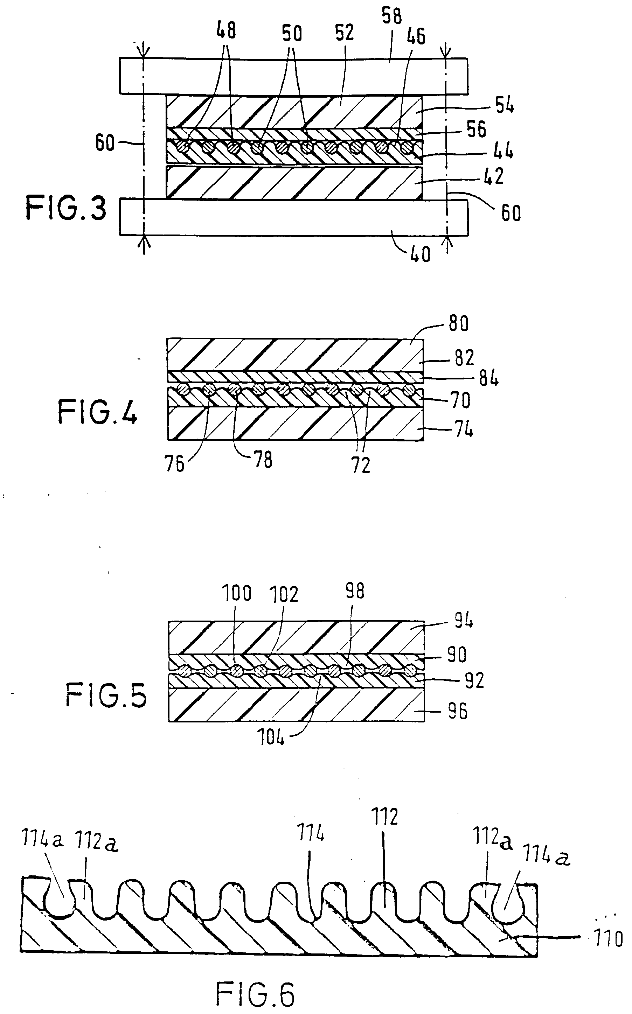

Fig. 3 zeigt eine Schnitt durch eine Gurtband Verbindung während deren Herstellung. Auf einer unteren Heizplatte 40 ist eine untere Außenplatte 42 aufgelegt. Diese Platte 42 besteht aus einem verschleißfesten Gummi. Auf der Außenplatte 42 liegt eine Innenplatte 44 mit daran angeformten Stegen 46.

Zwischen den Stegen sind Stahlseile 48 des einen Gurtbandendes und Stahlseile 50 des mit diesem zu verbindenden Gurtbandendes eingelegt. Auf die Innenplatte 44 mit den Stahlseilen 48 und 50 ist eine Verbundplatte 52 aufgelegt, die aus einer Außenplatte 54 aus Gummi und einer Innenplatte 56 aus einer Kautschukmischung besteht. Nach Auflegen der oberen Verbundplatte 52 wird eine obere Heizplatte 58 angeordnet, die über Bolzen 60 od.dgl. mit der unteren Heizplatte 40 verspannt wird. Durch Aufheizen der Heizplatten 40 und 58 werden die beiden Innenplatten 44 und 56 erwärmt, die sich dabei verbinden, so daß die Stahlseile 48 und 50 in einer homogenen Schicht eingebettet sind. Gleichzeitig verbindet sich die untere Innenplatte 44 mit der unteren Außenplatte 42. Die Stege 46 in Fig. 3 weisen eine Höhe auf, die etwa dem Durchmesser der eingelegten Stahlseile entspricht.

Fig. 4 zeigt eine Ausführungsform, bei der eine Innenplatte 70 mit angeformten Stegen 72 bereits mit einer unteren Außenplatte 74 verbunden ist. Die Innenplatte 70 und die Stege 72 bestehen aus einer Kautschukmischung und die Außenplatte 74 besteht aus abriebfestem Gummi. Nach Anordnen von Stahlseilen 76, 78 zwischen den Stegen 72 der Innenplatte 70 wird eine Verbundplatte 80 mit einer Außenplatte 82 aus Gummi und einer Innenplatte 84 aus einer Kautschukmischung aufgelegt. Die für die Vulkanisierung erforderlichen Heizplatten sind in Fig. 4 weggelassen. Die Höhe der Stege 72 ist etwa 80% des Durchmessers der Stahlseile 76, 78. Da die Oberfläche der Stege 72 deutlich unterhalb der Oberfläche der eingelegten Stahlseile liegt, können sich die von den Stegen freigelassenen Teile der Stahlseile unter dem Druck der Heizplatten in die weich werdende Innenplatte 84 vollständig eindrücken.

Bei der in Fig. 5 gezeigten Ausführungsform sind Innenplatten 90 und 92 aus einer vulkanisierbaren Kautschukmischung jeweils an einer oberen Außenplatte 94 und einer unteren Außenplatte 96 angeformt. Die obere Innenplatte 90 weist Stege 98 auf, deren Höhe etwa 50 % des Durchmessers der Stahlseile 100, 102 beträgt, sobald von den Heizplatten Druck auf die Außenplatten 94 und 96 ausgeübt wird. Stege 104 an der Innenplatte 92 haben etwa die gleiche Höhe wie die Stege 98 der Innenplatte 90. Die Freiräume zwischen den Oberflächen der Stege 98 und 104 sind in Fig. 5 übertrieben groß dargestellt. Wenn bei dieser Ausführungsform die Außenplatten 94 und 96 gleich dick ausgebildet sind, kann eine Stahlseilgurtverbindung mit identisch ausgebildeten Platten hergestellt werden.

Fig. 6 zeigt eine Innenplatte 110 mit angeformten Stegen 112. Die Nutböden 114 zwischen den Stegen 112 sind ausgerundet und entsprechen etwa der Außenkontur der einzulegenden Stahlseile. Die an den beiden Längsrändern gelegenen Nuten 114a sind von Stegen 112a begrenzt, die auf ihren zueinander gerichteten Seiten praktisch durchgehend mit einem Krümmungsradius ausgebildet sind, der etwa dem halben Durchmesser der einzulegenden Stahlseile entspricht. Diese Ausführungsform der Nuten ist bevorzugt, da hierdurch die eingelegten Stahlseile von der nicht vulkanisierten Kautschukmischung fast vollständig umschlossen werden und somit besonders große Kontaktflächen zwischen der Kautschukmischung und den Stahlseilen hergestellt werden.

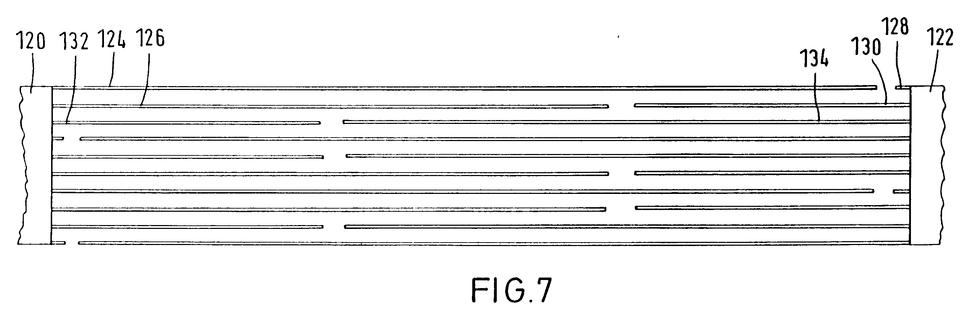

Die Fig. 7 bis 10 zeigen verschiedene Verbindungssysteme von armierten Gurtbändern. Fig. 7 zeigt eine Verbindung von Gurtbandenden 120 und 122. Zwischen den Stegen einer Innenplatte sind Stahlseilabschnitte der beiden Gurtbandenden eingelegt. Durch die Wahl der Länge der Stahlseile im Verbindungsabschnitt ergibt sich ein Überlappungsmuster, das als tannenbaumförmig bezeichnet werden kann. Das Stahlseil 124 des Gurtbandendes 120 weist etwa die Länge des Verbindungsabschnittes auf, während das danebenliegende Stahlseil 126 nur etwa zwei Drittel dieser Länge aufweist. Entsprechend liegt eine Kurzes Stahlseil 128 des Gurtbandendes 122 in der Nut des Stahlseils 124, während ein Stahlseil 130 mit etwa einem Drittel der Verbindungslänge in der Nut des Stahlseils 126 angeordnet ist. Danebenliegende Stahlseile 132 und 134 usw. der Gurtbandenden 120 und 122 weisen entsprechende andere Längenstaffelungen auf, so daß die Überlappungsbereiche zwischen benachbarten Stahlseilen der beiden Gurtbandenden 120 und 122 gestaffelt sind.

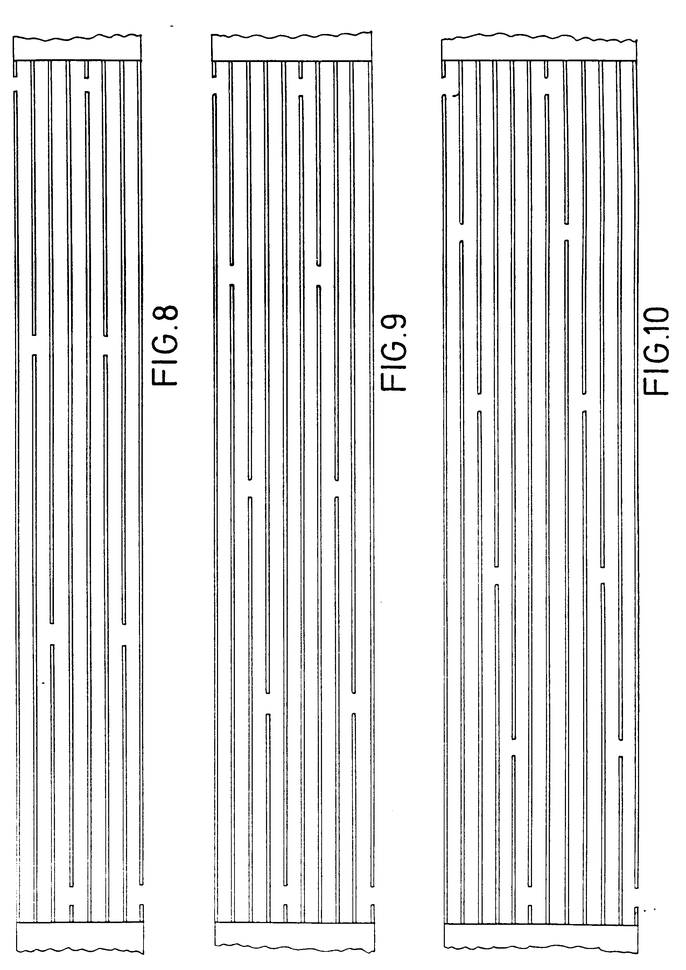

Die Fig. 8 bis 10 zeigen 3-stufige, 4-stufige bzw. 5-stufige Verbindungssysteme.

## Patentansprüche

1. Gummiplattenanordnung zum Verbinden der Enden eines mit Stahlseilen armierten Gurtbandes (10, 12) durch Vulkanisation im Verbindungsbereich (14) mittels Heizplatten (24; 32; 40; 58) unter Druck, das zwei verschließfeste äußere Gummischichten und eine innere weichere Gummischicht mit darin eingebetteten Stahlseilen (20, 22; 36; 48, 50; 76, 78; 100, 102) aufweist, bestehend aus zwei Gummiplatten, die von gegenüberliegenden Seiten an die freigelegten Stahlseile angelegt werden, von denen wenigstens eine Gummiplatte mit angeformten parallelen Stegen (46; 72; 98, 104; 112) zur passenden Aufnahme der freigelegten Stahlseile in den Steg-Zwischenräumen ausgebildet ist,
wobei beide Gummiplatten auf ihren benachbarten Oberflächen aus einer unvulkanisierten Gummimischung bestehen,
**dadurch gekennzeichnet**,
daß jede Gummiplatte eine Außenplatte (4, 52; 74, 80) aus einem im vulkanisierten Zustand abriebfesten Gummi und eine Innenplatte (44, 56; 70, 84) aus einer unvulkanisierten Kautschukmischung aufweist,
wobei der abriebfeste Gummi der Außenplatte der Qualität der äußeren Gummideckschicht des Gurtbandes und der durch Vulkanisation der Kautschukmischung der Innenplatte gebildete Gummi in seiner Qualität derjenigen der weicheren Inneren Gummischicht des Gurtbandes entspricht, und
daß in einer Innenplatte (44; 70; 110) die parallelen Stege (46; 72; 112) geformt sind, deren Steghöhe zwischen 70 und 100 %, bevorzugt 80 %, des Stahlseildurchmessers beträgt.

2. Gummiplattenanordnung nach dem Oberbegriff des Patentanspruchs 1,
dadurch gekennzeichnet,
daß jede Gummiplatte eine Außenplatte (94, 96) aus einem im vulkanisierten Zustand abriebfesten Gummi und eine Innenplatte (90, 92) aus einer unvulkanisierten Kautschukmischung aufweist,
wobei der abriebfeste Gummi der Außenplatte der Qualität der äußeren Gummideckschicht des Gurtbandes und der durch Vulkanisation der Kautschukmischung der Innenplatte gebildete Gummi in seiner Qualität derjenigen der weicheren inneren Gummischicht des Gurtbandes entspricht, und daß beide Innenplatten (90, 92) mit parallelen Stegen (98, 104) geformt sind, deren Steghöhe etwa 50 % des Durchmessers der Stahlseile beträgt.

3. Plattenanordnung nach Anspruch 1 oder 2,
dadurch gekennzeichnet,
daß die Kautschukmischung der Innenplatten in ihrer Klebrigkeit auf die Stoffschlußbindung mit den verzinkten Oberflächen der Stahlseile eingestellt ist.

4. Plattenanordnung nach einem der Ansprüche 1 bis 3,
dadurch gekennzeichnet,
daß die Innenplatte zumindest auf ihrer mit den Stegen ausgebildeten Fläche mit aufgelegter Kunststoffolie aus insbesondere Polyethylen geformt worden ist, welche durchgehend auf den Stegen und den Nuten anhaftet.

5. Plattenanordnung nach einem der Ansprüche 1 bis 4,
dadurch gekennzeichnet,
daß die Innenplatte an der ihr zugeordneten Außenplatte befestigt ist.

6. Plattenanordnung nach einem der Ansprüche 1 bis 5,
dadurch gekennzeichnet,
daß die an den beiden Rändern der Innenplatte (110) vorgesehenen Nuten (114a) Seitenflächen aufweisen, die praktisch durchgehend mit einem dem halben Drahtseil-Durchmesser entsprechenden Krümmungsradius geformt sind.

## Claims

1. Rubber sheet arrangement for interconnecting the ends of a belt conveyor (10, 12) armoured with steel cables by under-pressure vulcanization in the connecting area (14) with heating plates (24; 32; 40, 58), which comprises two abrasion-proof outer rubber layers and a smoother inner rubber layer with steel cables (20, 22; 36; 48, 50; 76, 78; 100, 102) embedded therein, consisting of two rubber sheets which are put against the laid bare steel cables from opposite sides, wherein at least one of the rubber sheets is provided with parallel projections (46; 72; 98; 104; 112) for suitably receiving the laid bare steel cables in the space between the parallel projections (46; 72; 98; 104; 112) wherein both rubber sheets consist of an unvulcanized rubber mixture on adjacent surfaces,
**characterized in that**
each rubber sheet comprises an outer plate (42, 52; 74, 80) consisting of a non-abrasive rubber in the unvulcanized state and an inner plate (44, 56; 70, 84) consisting of an unvulcanized caoutchouc mixture,
wherein the non-abrasive rubber of the outer plate corresponds to the quality of the outer surface rubber layer of the belt conveyor and the rubber formed by vulcanization of the coutchouc mixture of the inner plate corresponds in its quality to the same of the smoother inner rubber layer of the belt conveyor, and the parallel projections (46; 72; 112) are formed in one inner plate (44; 70; 110) which height is in the range between 70 and 100 %, preferrably 80 % of the diameter of the steel cable.

2. Rubber sheet arrangement according to the preamble of claim 1,
characterized in that
each rubber sheet is provided with an external plate (94, 96) consisting of a non-abrasive rubber in the vulcanized state and an inner plate (90, 92) consisting of an unvulcanized caoutchouc mixture,
wherein the non-abrasive rubber of the outer plate corresponds to the quality of the outer surface rubber layer of the belt conveyor and the rubber formed by vulcanization of the caoutchouc mixture of the inner plate corresponds in its quality to the smoother inner rubber layer of the belt conveyor and
both inner plates (90, 92) are formed with parallel projections (98, 104) with a height of about 50 % of the diameter of the steel cables.

3. Rubber sheet arrangement according to claim 1 or 2,
characterized in that
the caoutchouc mixture of the inner plates is adapted in its adhesiveness to the adjunction with the galvanized surfaces of the steel cables.

4. Rubber sheet arrangement according to one of claims 1 to 3,
characterized in that
the inner plate is formed at least on the surface comprising the projections with a feeded plastic sheet, particularly polyethylene, which adheres continuously on the projections and the grooves.

5. Sheet arrangement according to one of claims 1 to 4,
characterized in that
the inner plate is fixed on the corresponding outer plate.

6. Sheet arrangement according to one of claims 1 to 5,
characterized in that
the grooves provided on both outer sides of the inner plate (110) comprise lateral surfaces which are formed practically continuously with a curvature radius corresponding to one half of the diameter of the steel cable.

## Revendications

1. Jeu de plaques de caoutchouc pour réunir les extrémités d'une courroie (10, 12) armée de câbles d'acier, par vulcanisation sous pression dans la zone de jonction (14) au moyen de plateaux chauffants (24 ; 32 ; 40, 58), qui présente deux couches de caoutchouc extérieures résistantes à l'usure et une couche de caoutchouc intérieure plus molle avec des câbles d'acier (20, 22 ; 36 ; 48, 50 ; 76, 78 ; 100, 102) noyés dans cette couche, composé de
deux plaques de caoutchouc qui sont appliquées, par leurs deux faces opposées, contre les câbles d'acier dégagés, dont au moins une plaque de caoutchouc est munie de nervures parallèles (46 ; 72 ; 98, 104 ; 112) venues de moulage pour recevoir dans une disposition ajustée les câbles d'acier dégagés dans les intervalles entre les nervures,
les deux plaques de caoutchouc étant ici composées d'un mélange de caoutchouc non vulcanisé sur leurs surfaces adjacentes,
caractérisé
en ce que chaque plaque de caoutchouc présente une plaque extérieure (42, 52 ; 74, 80) faite d'un caoutchouc résistant à l'abrasion à l'état vulcanisé et une plaque intérieure (44, 56 ; 70, 84) faite d'un mélange de caoutchouc non vulcanisé,
le caoutchouc résistant à l'usure de la plaque extérieure correspondant à la qualité de la couche de revêtement extérieure en caoutchouc de la courroie et le caoutchouc formé par la vulcanisation du mélange de caoutchouc de la plaque intérieure correspondant par sa qualité à celle de la couche de caoutchouc intérieure plus molle de la courroie, et
en ce que les nervures parallèles (46 ; 72 ; 112) sont formées sur une plaque intérieure (44 ; 70 ; 110), la hauteur de ces nervures représentant entre 70 % et 100 %, de préférence 80 % du diamètre des câbles d'acier.

2. Jeu de plaques de caoutchouc selon le préambule de la revendication 1,
caractérisé
en ce que chaque plaque de caoutchouc présente une plaque extérieure (94, 96) faite d'un caoutchouc résistant à l'abrasion à l'état vulcanisé et une plaque intérieure (90, 92) faite d'un mélange de caoutchouc non vulcanisé, le caoutchouc résistant à l'abrasion de la plaque extérieure correspondant à la qualité de la couche de revêtement de caoutchouc extérieure de la courroie et le caoutchouc formé par la vulcanisation du mélange de caoutchouc de la plaque intérieure correspondant par sa qualité à celle de la couche de caoutchouc intérieure plus molle de la courroie, et
en ce que les deux plaques intérieures (90, 92) sont munies de nervures parallèles (98, 104) venues de moulage dont la hauteur de nervure correspond à peu près à 50 % du diamètre des câbles d'acier.

3. Jeu de plaques selon la revendication 1 ou 2,
caractérisé
en ce que le mélange de caoutchouc des plaques intérieures est ajusté en adhésivité, pour obtenir une liaison par adhérence de matières avec les surfaces galvanisées des câbles d'acier.

4. Jeu de plaques selon une des revendications 1 à 3,
caractérisé
en ce que, du moins sur sa face munie des nervures, la plaque intérieure a été moulée avec une feuille de matière plastique, notamment une feuille de polyéthylène, posée sur elle, qui est appliquée sans interruption sur les nervures et les rainures.

5. Jeu de plaques selon une des revendications 1 à 4,
caractérisé
en ce que la plaque intérieure est fixée à la plaque extérieure correspondante.

6. Jeu de plaques selon une des revendications 1 à 5,
caractérisé
en ce que les rainures (114a) prévus le long des deux bords de la plaque intérieure (110) présentent des surfaces latérales gui sont moulées de façon pratiquement continue avec un rayon de courbure correspondant au rayon des câbles d'acier.
